# EUROPÄISCHE PATENTANMELDUNG

(11) **EP 1 097 827 A2**
(43) Veröffentlichungstag der Anmeldung: **09.05.2001**
(21) Anmeldenummer: 00123805.4
(22) Anmeldetag: 02.11.2000
(51) Int. Cl.: B60H 1/00, B60N 2/44

(54) **Belüftungsvorrichtung für einen Sitz eines Fahrzeugs**

(30) Priorität: 05.11.1999 DE 19953465
(71) Anmelder: Webasto Systemkomponenten GmbH & Co. KG, 82131 Stockdorf (DE); W.E.T. AUTOMOTIVE SYSTEMS AG, 85235 Odelzhausen (DE)
(72) Erfinder: Ganz, Thomas, 82131 Stockdorf (DE); Rauh, Hans-Georg, 82140 Olching (DE); Stöwe, Stefan, Dr., 86415 Mering (DE)
(74) Vertreter: Konnerth, Dieter Hans

(57) **Zusammenfassung**

Die Erfindung betrifft eine Belüftungsvorrichtung für einen Sitz (2, 3) eines Fahrzeugs (1), der eine elektrisch betriebene Lüftereinrichtung (3, 5) aufweist, wobei das Fahrzeug (1) eine Solarzellenanordnung (8) aufweist, die bei abgestelltem Fahrzeug (1) eine Solar-Stromversorgung zum Betrieb der Lüftereinrichtung (3, 5) bereitstellt.

## Beschreibung

Die Erfindung betrifft eine Belüftungsvorrichtung für einen Sitz eines Fahrzeugs, der eine elektrisch betriebene Lüftereinrichtung aufweist.

Es ist bekannt, Fahrzeugsitze mit einem Heiz-Lüftungssystem auszustatten, das jedoch nur bei eingeschalteter Zündung über das Bordnetz betrieben werden kann.

In der DE 197 37 636 A1 ist ein Klimasitz beschrieben, der einen in der Mittelzone seiner Rückenlehne in etwa vertikal verlaufenden Luftkanal aufweist. Ein von einem Elektromotor angetriebenes Gebläse ist im Luftkanal nahe dem oberen Luftaustritt angeordnet. Die Stromversorgung des Elektromotors erfolgt offensichtlich über die Fahrzeugbatterie.

Des weiteren ist es aus der DE 35 40 353 A1 bekannt, mittels am Fahrzeug angebrachter Solarzellen einen Lüfter zur Belüftung und Frischluftversorgung des Fahrzeuginnenraumes auch bei ausgeschalteter Zündung zu betreiben.

Einer durch Sonneneinstrahlung verursachten Aufheizung der Sitze und insbesondere der Körperkontaktflächen von dunklen Ledersitzen kann bei einem abgestellten Fahrzeug mit den bekannten Vorrichtungen nicht oder nicht im erforderlichen Maße entgegengewirkt werden.

Aufgabe der Erfindung ist es daher, eine Belüftungsvorrichtung für einen Fahrzeugsitz zu schaffen, die auch bei abgestelltem Fahrzeug eine Belüftung des Sitzes und damit eine Temperaturreduzierung der Körperkontaktfläche des Sitzes ermöglicht.

Diese Aufgabe wird bei der eingangs genannten Belüftungsvorrichtung erfindungsgemäß dadurch gelöst, daß das Fahrzeug eine Solarzellenanordnung aufweist, die bei abgestelltem Fahrzeug eine Solar-Stromversorgung zum Betrieb der Lüftereinrichtung bereitstellt. Damit kann eine Sitzbelüftung, die eine Reduzierung der Sitztemperatur auf die Innenraumtemperatur gestattet, auch bei abgestelltem Motor und unterbrochener Zündung und somit bei Trennung von dem Bordnetz erfolgen. Die Solar-Stromversorgung stellt die erforderliche Energie dann bereit, wenn die Sonneneinstrahlung zu einer Aufheizung der Sitze führt. Die Fahrzeugbatterie wird nicht belastet.

Vorteilhafte Ausgestaltungen der Erfindung sind in den Unteransprüchen angegeben.

In einer zweckmäßigen Ausgestaltung ist in dem Sitz zumindest ein elektrisch betriebener Ventilator oder ein Gebläse zum Erzeugen eines Luftstromes angeordnet, wobei der Luftstrom vom Sitzinneren an eine Sitzfläche und/oder eine Sitzlehne des Sitzes geleitet wird und über zumindest eine Öffnung des Sitzes oder über einen luftdurchlässigen Bereich des Sitzes austritt. Durch das im Sitz enthaltene Gebläse bzw. den Ventilator oder Lüfter sind keine speziellen Lüftungskanäle zum Zuführen eines Luftstromes von einem außerhalb des Sitzes gelegenen Gebläse an den Sitz erforderlich. Durch das Anblasen der Innen- oder Unterseite der Sitz- und/oder Lehnenflächen und den Austritt des Luftstromes durch darin gebildete Öffnungen oder Perforierungen wird eine wirksame Belüftung mit einer Temperaturreduzierung der entsprechenden Sitz- oder Körperkontaktflächen des Sitzes erzielt. Eine Kühlung der Belüftungsluft durch eine Kühl- oder Klimaanlage ist nicht erforderlich. Die Anzahl und Leistung der Ventilatoren oder Gebläse im Sitz und/oder der Lehne wird in Abhängigkeit von der erforderlichen Kühl- oder Belüftungsleistung und der Einbauverhältnisse festgelegt.

Vorzugsweise ist eine Regeleinrichtung vorgesehen, die die Solar-Stromversorgung von der Solarzellenanordnung zu der Lüftereinrichtung bzw. dem Ventilator oder Gebläse steuert. Durch die Regeleinrichtung kann die Stromversorgung individuell und bedarfsweise geregelt werden, so daß überschüssiger Strom z. B. zur Aufladung der Batterie verwendet werden kann. Die Regeleinrichtung kann die Stromversorgung insbesondere bei abgeschalteter Zündung aktivieren, kann diese jedoch auch bei laufendem Motor zuschalten, so daß die Sitzbelüftung auch im Fahrbetrieb über die Solar-Stromversorgung betreibbar ist.

In einem bevorzugten Ausführungsbeispiel steuert die Regeleinrichtung die Solar-Stromversorgung des Ventilators in Abhängigkeit von der Sitztemperatur und insbesondere von der Oberflächentemperatur der Sitzfläche und/oder der Sitzlehne.

Zweckmäßigerweise kann vorgesehen sein, daß die Regeleinrichtung die Solar-Stromversorgung des Ventilators alternativ oder zusätzlich zu der Temperatursteuerung in Abhängigkeit von der Sonnenlichteinstrahlung auf den Sitz, insbesondere auf die Sitzfläche und/oder die Sitzlehne, steuert.

Vorzugsweise ist zumindest ein Sensor dem Sitz zugeordnet und mit der Regeleinrichtung verbunden, wobei der Sensor eine Regelgröße der Regeleinrichtung erfaßt. Der Sensor kann am oder in dem Sitz oder der Sitzlehne oder auch beabstandet vom Sitz zur berührungslosen Messung angeordnet sein. Für die beschriebene Regelung kann der Sensor ein Temperatursensor oder ein Lichtsensor sein, jedoch können auch auf anderen Meßprinzipien basierende Sensoren zur Regelung der Sitzbelüftung verwendet werden.

Wenn die Solar-Stromversorgung zu zumindest einem Ventilator mittels einer manuell bedienbaren Schalteinrichtung abschaltbar ist, so kann z. B. im Winter die Belüftung abgestellt werden, wenn eine Erwärmung des Sitzes durch Sonneneinstrahlung erwünscht sein sollte.

Vorzugsweise treibt die Solar-Stromversorgung zusätzlich ein Fahrzeuggebläse zur Frischluftzufuhr in das Fahrzeug an. Über die Regeleinrichtung kann diesem Fahrzeuggebläse die von der Sitzbelüftungseinrichtung nicht benötigte Energie der Solarzellen zugeführt werden.

Bei einem bevorzugten Ausführungsbeispiel sind unter der Sitzfläche zwei Ventilatoren und hinter der Sitzlehne ein Ventilator angeordnet. Jedoch sind, wie oben erwähnt, auch andere Kombinationen bedarfsweise möglich.

Bevorzugt ist der Ventilator ein Radiallüfter, der mit einem guten Wirkungsgrad arbeitet, er kann jedoch auch ein Axialgebläse sein.

Nachfolgend wird ein Ausführungsbeispiel der Erfindung unter Bezugnahme auf Zeichnungen näher erläutert. Es zeigt:

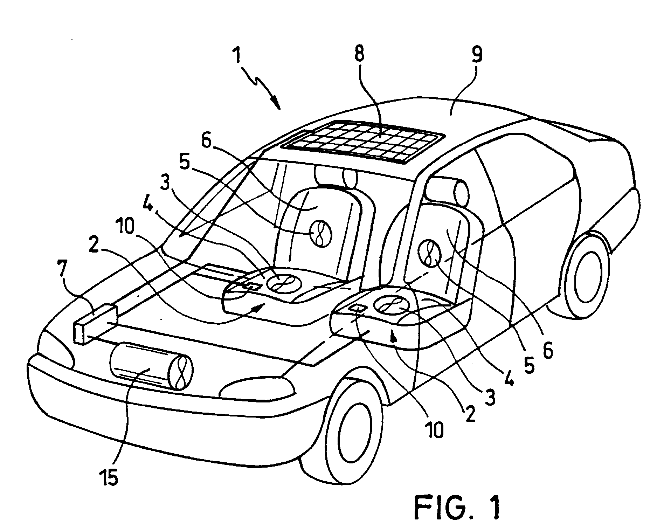

- Fig. 1: in einer perspektivischen Draufsicht in schematischer Darstellung ein Fahrzeug mit einer Belüftungsvorrichtung für die Fahrzeugsitze; und
- Fig. 2: in einer schematischen Darstellung ein Schaltbild der Belüftungsvorrichtung.

Ein Fahrzeug 1, insbesondere ein Personenkraftfahrzeug, enthält zwei vordere Sitze 2, in denen jeweils ein Lüfter oder Ventilator 3 im Inneren des Sitzes unterhalb einer Sitzfläche 4 und ein Ventilator 5 in der Sitzlehne 6 angeordnet sind. Jeder rotierende Ventilator 3, 5 bläst einen Luftstrom vom Sitzinneren gegen die Sitzfläche 4 bzw. die Sitzlehne 6, die insbesondere aus Leder bestehen und eine Perforierung zum Ausströmen des Luftstromes aufweisen, jedoch kann auch ein Sitz mit einem Stoffbezug mit einem großporigen, luftdurchlässigen Stoff verwendet werden.

Die Ventilatoren 3, 5 sind mit einer Regeleinrichtung 7 verbunden, die aufgrund von Signalen eine Stromversorgung für die Ventilatoren 3, 5 bereitstellt. Die Stromversorgung erfolgt über eine Solarzellenanordnung 8, die beispielsweise auf dem Fahrzeugdach 9 angebracht oder als Solardach mit integriertem Solarmodul gebildet ist, das z. B. 28 Solarzellen aufweist. Die Solarzellen 8 können jedoch auch an anderen Karosserieteilen angebracht oder integriert sein, wie z. B. am Kofferraumdeckel, insbesondere bei Verwendung an einem Cabriolet.

Die Regeleinrichtung 7 ist mit zumindest einem Sensor 10 zum Erfassen einer Regelgröße verbunden. Die Regelgröße ist beispielsweise die Sitztemperatur an der Sitzfläche 4 oder der Sitzlehne 6 und insbesondere deren Oberflächentemperatur. Zum Erfassen dieser Temperatur ist demzufolge ein Temperatursensor im oder am Sitz 2 oder ein berührungslos messender Temperatursensor im Fahrzeug 1 angeordnet. Derartige Temperatursensoren können sowohl für die Sitzfläche 4 wie auch für die Sitzlehne 6 jedes Sitzes in Zuordnung zu den Ventilatoren 3, 5 und zur Regelung der jeweiligen Stromversorgung vorgesehen sein.

Alternativ oder zusätzlich zu dem zumindest einen Temperatursensor kann mit der Regeleinrichtung 7 ein Lichtsensor verbunden sein, der den Einfall von Sonnenlicht und insbesondere eine direkte Sonnenlichtbestrahlung der Sitzfläche 4 bzw. der Sitzlehne 6 erfaßt. Ein derartiger Lichtsensor ist z. B. eine Fotozelle, die im Bereich der Sitzfläche 4 bzw. der Sitzlehne 6 angebracht oder integriert ist.

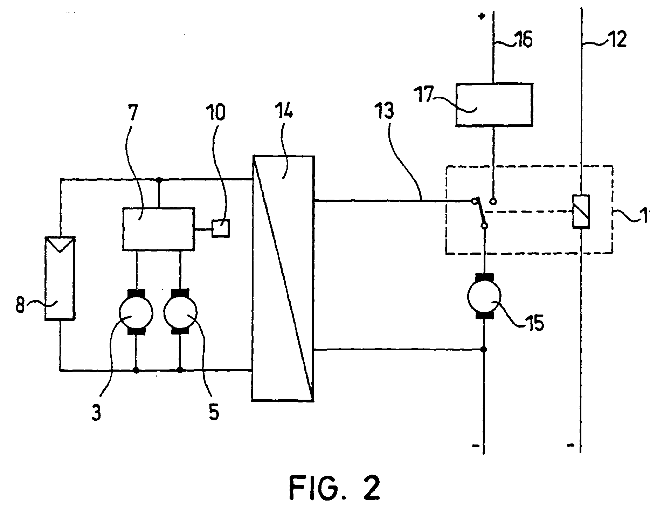

In der in Fig. 2 dargestellten Schaltungsanordnung der Belüftungsvorrichtung hat ein Relais 11, das über eine Leitung 12 mit der Motorzündung des Fahrzeugs verbunden ist, bei ausgeschalteter Zündung einen Ruhekontaktstromkreis 13 geschaltet, so daß ein Strom von den Solarzellen 8 über einen die Spannung konstant haltenden Gleichspannungswandler 14 zu einem Fahrzeug-Gebläsemotor 15 fließen kann, der Frischluft in das Fahrzeug einbläßt. Sobald von den Solarzellen 8 eine ausreichende Spannung bereitgestellt wird, läuft somit der Fahrzeug-Gebläsemotor 15.

Mittels der Regeleinrichtung 7 wird in Abhängigkeit von zumindest einer Regelgröße, die über den zumindest einen Sensor 10 erfaßt wird, ein variabler, geregelter Anteil der von den Solarzellen 8 erzeugten elektrischen Energie zu den Ventilatoren 3, 5 geliefert. So wird bei flachem Sonnenstand, wenn die Sonne intensiv auf die Sitzlehne 6 einstrahlt und diese Einstrahlung beispielsweise mit einem Lichtsensor 10 oder Solarimeter erfaßt wird, der zugeordnete Ventilator 5 im erforderlichen Maß mit Energie versorgt, um eine gewünschte Temperaturabsenkung durch die zirkulierende Luftströmung zu erreichen. Wenn durch den sich ändernden Sonnenstand eine direkte Sonneneinstrahlung auf einen Sitz entfällt, kann die von den Solarzellen 8 erzeugte Energie statt für eine Sitzbelüftung für eine Belüftung des Fahrzeuginnenraumes über den Fahrzeug-Gebläsemotor 15 genutzt werden.

Durch die gezielte Regelung jedes Sitzes 2 des Fahrzeugs kann die unterschiedliche Sonneneinstrahlung bei der Sitzbelüftung berücksichtigt werden, wobei auch die Rücksitze in einem PKW, die Sitze eines LKW oder jedes anderen Fahrzeugs oder die Sitze eines Omnibusses einzeln oder auch in Gruppenschaltung belüftbar sind.

Bei eingeschalteter Zündung (Leitung 12 bestromt) schaltet das Relais 11 eine Verbindung zwischen der Leitung 16 des Bordnetzes und dem Fahrzeug-Gebläsemotor 15, so daß dieser von dem Stromkreis der Solarzellen getrennt ist.

Mittels eines in die Leitung 16 zwischengeschalteten Gebläsereglers 17, der Teil einer Klimaanlage sein kann, ist die Drehzahl des Fahrzeug-Gebläsemotors 15 z. B. durch Vorwahl einer Gebläsestufe einstellbar.

## Patentansprüche

1. Belüftungsvorrichtung für einen Sitz eines Fahrzeugs, der eine elektrisch betriebene Lüftereinrichtung aufweist, **dadurch gekennzeichnet,** daß das Fahrzeug (1) eine Solarzellenanordnung (8) aufweist, die bei abgestelltem Fahrzeug (1) eine Solar-Stromversorgung zum Betrieb der Lüftereinrichtung (3, 5) bereitstellt.

2. Belüftungsvorrichtung nach Anspruch 1, dadurch gekennzeichnet, daß in dem Sitz (2) zumindest ein elektrisch betriebener Ventilator (3, 5) oder ein Gebläse zum Erzeugen eines Luftstromes angeordnet ist, wobei der Luftstrom vom Sitzinneren an eine Sitzfläche (4) und/oder eine Sitzlehne (6) des Sitzes geleitet wird und über zumindest eine Öffnung des Sitzes (2) oder über einen luftdurchlässigen Bereich des Sitzes (2) austritt.

3. Belüftungsvorrichtung nach Anspruch 1 oder 2, dadurch gekennzeichnet, daß eine Regeleinrichtung (7) vorgesehen ist, die die Solar-Stromversorgung von der Solarzellenanordnung (8) zu der Lüftereinrichtung bzw. dem Ventilator (3, 5) steuert.

4. Belüftungsvorrichtung nach Anspruch 3, dadurch gekennzeichnet, daß die Solar-Stromversorgung der Lüftereinrichtung bzw. des Ventilators (3, 5) von der Regeleinrichtung (7) bei abgeschalteter Zündung aktiviert ist.

5. Belüftungsvorrichtung nach Anspruch 3 oder 4, dadurch gekennzeichnet, daß die Regeleinrichtung (7) die Solar-Stromversorgung des Ventilators (3, 5) in Abhängigkeit von der Sitztemperatur, insbesondere der Oberflächentemperatur der Sitzfläche (4) und/oder der Sitzlehne (6), steuert.

6. Belüftungsvorrichtung nach einem der Ansprüche 3 bis 5, dadurch gekennzeichnet, daß die Regeleinrichtung (7) die Solar-Stromversorgung des Ventilators (3, 5) in Abhängigkeit von der Sonnenlichteinstrahlung auf den Sitz, insbesondere auf die Sitzfläche (4) und/oder die Sitzlehne (6), steuert.

7. Belüftungsvorrichtung nach einem der Ansprüche 3 bis 6, dadurch gekennzeichnet, daß zumindest ein Sensor (10) dem Sitz (2) zugeordnet und mit der Regeleinrichtung (7) verbunden ist, der eine Regelgröße der Regeleinrichtung (7) erfaßt.

8. Belüftungsvorrichtung nach Anspruch 7, dadurch gekennzeichnet, daß der Sensor (10) ein Temperatursensor oder ein Lichtsensor ist.

9. Belüftungsvorrichtung nach einem der Ansprüche 1 bis 8, dadurch gekennzeichnet, daß die Solar-Stromversorgung zu zumindest einem Ventilator (3, 5) mittels einer manuell bedienbaren Schalteinrichtung abschaltbar ist.

10. Belüftungsvorrichtung nach einem der Ansprüche 1 bis 8, dadurch gekennzeichnet, daß die Solar-Stromversorgung zusätzlich ein Fahrzeuggebläse (15) zur Frischluftzufuhr in das Fahrzeug (1) antreibt.

11. Belüftungsvorrichtung nach einem der Ansprüche 1 bis 10, dadurch gekennzeichnet, daß unter der Sitzfläche (4) zwei Ventilatoren (3) und hinter der Sitzlehne (6) ein Ventilator (5) angeordnet sind bzw. ist.

12. Belüftungsvorrichtung nach einem der Ansprüche 1 bis 11, dadurch gekennzeichnet, daß der Ventilator (3, 5) ein Radiallüfter oder Axiallüfter ist.
